# EUROPÄISCHE PATENTANMELDUNG

(11) **EP 4 841 140 A1**
(43) Veröffentlichungstag der Anmeldung: **18.11.2026**
(21) Anmeldenummer: 25175829.8
(22) Anmeldetag: 12.05.2025
(51) Int. Cl.: F16K 17/30, E03D 9/16

(54) **STRÖMUNGSDÄMPFER FÜR EINE SANITÄRE EINRICHTUNG, DESSEN VERWENDUNG UND SANITÄRE SPÜLANLAGE**

(71) Anmelder: Neoperl GmbH, 79379 Müllheim (DE)
(72) Erfinder: Riek, Lennard, 79189 Bad Krozingen (DE)
(74) Vertreter: Mertzlufft-Paufler, Cornelius

(57) **Zusammenfassung**

Die Erfindung schlägt einen Strömungsdämpfer (1) für eine sanitäre Einrichtung (2) vor, der einen Strömungskanal (3) und einen Stellkörper (4) aufweist. Der Stellkörper (4) ist dabei zwischen einer Ruhelage (5) und einer Schließlage (6) beweglich. In der Schließlage (6) ist der Strömungskanal (3) zumindest teilweise durch den Stellkörper (4) verschlossen. Weiter wird vorgeschlagen, dass von einem den Strömungsdämpfer (1) durchströmenden Fluid (7) eine Schließbewegung (8) des Stellkörpers (4) in Richtung der Schließlage (6) erzeugbar ist. Der Strömungsdämpfer (1) weist zudem eine Rückstellvorrichtung (9) auf, die dazu ausgebildet ist, der Schließbewegung (8) entgegenzuwirken.

## Beschreibung

Die Erfindung betrifft einen Strömungsdämpfer für eine sanitäre Einrichtung aufweisend einen Strömungskanal und einen Stellkörper, wobei der Stellkörper zwischen einer Ruhelage und einer Schließlage beweglich ist und wobei der Stellkörper in der Schließlage den Strömungskanal zumindest teilweise verschließt. Solche Strömungsdämpfer sind in der Praxis bekannt.

Die Erfindung betrifft weiter eine sanitäre Spülanlage mit einem Ablaufrohr, in dem ein Strömungsdämpfer angeordnet ist. Derartige sanitäre Spülanlagen sind in der Praxis bekannt.

Die Erfindung betrifft weiter eine Verwendung eines Strömungsdämpfers bei einer sanitären Spülanlage. Eine solche Verwendung ist in der Praxis bekannt.

Der Erfindung liegt die Aufgabe zu Grunde, die Gebrauchseigenschaften einer sanitären Spülanlage zu verbessern. Insbesondere sollen bei sanitären Spülanlagen, die einen Spülkasten aufweisen, Durchflussspitzen einer Fluidströmung, die den Spülkasten verlässt, ausgeglichen werden.

Zur Lösung dieser Aufgabe schlägt die Erfindung die Merkmale von Anspruch 1 vor. Insbesondere wird somit erfindungsgemäß bei einem Strömungsdämpfer der eingangs beschriebenen Art vorgeschlagen, dass von einem den Strömungsdämpfer durchströmenden Fluid eine Schließbewegung des Stellkörpers in Richtung der Schließlage erzeugbar ist. Dabei ist eine Rückstellvorrichtung des Strömungsdämpfers dazu ausgebildet, der Schließbewegung entgegenzuwirken. Hierdurch können Durchflussspitzen einer Fluidströmung, die den Strömungsdämpfer durchströmt, gedämpft werden, da der Strömungskanal zumindest teilweise verschlossen wird, wenn ein Strömungsdruck und/oder eine Durchflussmenge des Fluids eine bestimmte Größe hat. Damit kann ein Strömungsdruck des strömenden Fluid durch den Strömungsdämpfer reduziert werden. Dies kann sich positiv auf die Gebrauchseigenschaften der sanitären Einrichtung auswirken.

Bei der sanitären Einrichtung kann beispielsweise eine sanitäre Spülanlage umfassen, die einen Spülkasten aufweist. Wenn ein Nutzer eine Wasserabgabe des Spülkastens auslöst, dann können, insbesondere anfangs, Durchflussspitzen in der Strömung auftreten. Dies kann dazu führen, dass das Wasser beispielsweise über einen Rand eines WC-Beckens der sanitären Einrichtung laufen kann. Mittels des erfindungsgemäßen Strömungsdämpfers kann dies vermieden werden, da die auftretenden Durchflussspitzen abgedämpft werden können.

Bei dem Stellkörper kann es sich beispielsweise um eine Klappe handeln, die vor einem Eingang des Strömungskanals platziert ist. Durch das strömende Fluid kann die Klappe geschlossen werden. Die Klappe kann dabei denselben Durchmesser wie der Strömungskanal aufweisen, also den Strömungskanal komplett verschließen. Die Klappe kann aber auch einen kleineren Durchmesser aufweisen, um den Strömungskanal nur teilweise zu verschließen. Vorteilhaft hieran kann sein, dass sich der Druck der Strömung langsam abbauen kann, indem ein kleiner Teil der Strömung durch durch den Strömungskanal des Strömungsdämpfers fließen kann. Sobald in der Folge der Strömungsdruck kleiner wird, kann die Rückstellvorrichtung den Stellkörper, also in diesem Beispiel die Klappe, wieder in die Ruhelage bewegen, wodurch der Strömungskanal wieder vollständig geöffnet ist. In diesem Fall kann das restliche Fluid den Strömungskanal durchströmen.

Bei dem Stellkörper kann es sich beispielsweise aber auch um eine Kugel, einen Zylinder oder um eine andere geometrische Form handeln. Hierdurch kann der Strömungsdämpfer besonders flexibel ausgestaltet werden.

Die Rückstellvorrichtung kann beispielsweise eine Feder oder auch ein anderes elastisches Element umfassen, mit dem der Strömungsdämpfer wieder in die Ruhelage bewegt werden kann. Denkbar ist auch, dass die Rückstellvorrichtung Magnete oder auch andere Rückstellelemente umfasst.

Bei dem Fluid kann es sich beispielsweise um Wasser handeln. Es sind aber auch andere Fluide denkbar.

Bei einer vorteilhaften Ausgestaltung kann vorgesehen sein, dass der Strömungsdämpfer eine Durchströmungsöffnung für ein Fluid aufweist, wobei ein Querschnitt der Durchströmungsöffnung abhängig von einer Position des Stellkörpers ist. Hierdurch kann eine Größe der Durchströmungsöffnung veränderbar sein, wodurch je nach Strömungsgegebenheiten ein größerer oder ein kleinerer Querschnitt vorliegen kann. Dadurch kann eine Durchflussmenge durch den Strömungsdämpfer geregelt werden.

Die Durchströmungsöffnung kann einem durchströmbaren Querschnitt an einer Stelle des Strömungskanals oder innerhalb des Strömungskanals entsprechen, wobei an dieser Stelle der Stellkörper positioniert ist. Bei dieser Stelle kann es sich also beispielsweise um die Ruhelage, die Schließlage und/oder eine andere Position des Stellkörpers handeln.

Die Durchströmungsöffnung kann alternativ oder zusätzlich beispielsweise als die Öffnung mit dem kleinsten Flächeninhalt oder die Öffnung an einer engsten Stelle charakterisierbar sein. Besonders günstig ist es, wenn die engste Stelle am Stellkörper gebildet ist. Dies erlaubt eine Veränderlichkeit der Durchströmungsöffnung je nach Position des Stellkörpers.

Bevorzugt ist der Querschnitt der Durchströmungsöffnung umso kleiner, je näher der Stellkörper der Schließlage ist. Vorteilhaft hieran kann sein, dass der Stellkörper umso weiter in Richtung der Schließlage bewegt wird und somit der Querschnitt der Durchströmungsöffnung umso kleiner wird, je größer der Strömungsdruck ist. Somit kann der Querschnitt der Durchströmungsöffnung in Abhängigkeit des jeweils vorliegenden Strömungsdruck variabel sein. Dadurch kann ein möglichst gleichbleibender Strömungsdruck auf einer Auslassseite des Strömungsdämpfers erreicht werden.

Bei einer weiteren vorteilhaften Ausgestaltung kann vorgesehen sein, dass der Querschnitt der Durchströmungsöffnung mindestens 10% eines lichten Querschnitts des Strömungskanals beträgt, wenn sich der Stellkörper in der Ruhelage befindet. Damit kann in der Ruhelage des Stellkörpers die Durchströmungsöffnung ausreichend groß für eine Durchströmung des Strömungsdämpfers sein.

Der lichte Querschnitt des Strömungskanals kann also auch von dem Stellkörper teilweise verschlossen sein, wenn sich der Stellkörper in der Ruhelage befindet. In diesem Fall kann der lichte Querschnitt des Strömungskanals aber lediglich zu maximal 90% verschlossen sein, damit der Querschnitt der Durchströmungsöffnung für das Fluid mindestens 10% des lichten Querschnitts des Strömungskanals betragen kann.

Bevorzugt ist vorgesehen, dass der Querschnitt der Durchströmungsöffnung eine Öffnung belässt, wenn sich der Stellkörper in der Ruhelage befindet. Somit kann ein anfänglicher Schwall auf einfache Weise gedämpft werden, ohne das unerwünschte Reflektionen oder Aufstauungen stattfinden.

Beispielsweise kann vorgesehen sein, dass der Querschnitt der Durchströmungsöffnung mindestens 30% eines lichten Querschnitts des Strömungskanals beträgt, wenn sich der Stellkörper in der Ruhelage befindet. Damit kann der Querschnitt der Durchströmungsöffnung in der Ruhelage des Stellkörpers besonders groß sein.

Auch kann beispielsweise vorgesehen sein, dass der Querschnitt der Durchströmungsöffnung mindestens 50% eines lichten Querschnitts des Strömungskanals beträgt, wenn sich der Stellkörper in der Ruhelage befindet. Damit kann der Querschnitt der Durchströmungsöffnung in der Ruhelage des Stellkörpers noch größer ausgebildet sein. Bei einer weiteren vorteilhaften Ausgestaltung kann vorgesehen sein, dass der Querschnitt der Durchströmungsöffnung eine verbleibende Öffnung belässt, wenn sich der Stellkörper in der Schließlage befindet. Es ist somit selbst bei einer maximalen Auslenkung und somit möglicherweise maximalen Dämpfungswirkung ein residualer Durchfluss zulassbar. Somit kann ein Abreißen oder Blockieren einer Spülung vermieden werden. Insbesondere kann vorgesehen sein, dass der Querschnitt der Durchströmungsöffnung mindestens 5% eines lichten Querschnitts des Strömungskanals, beispielsweise des zuvor erwähnten lichten Querschnitts, beträgt, wenn sich der Stellkörper in der Schließlage befindet. Hierdurch kann erreicht werden, dass bei großen Strömungsdrücken die Durchströmungsöffnung zwar klein ist, aber dass trotzdem eine Durchströmung des Strömungsdämpfers gewährleistet ist. Hierdurch können Durchflussspitzen an der Auslassseite des Strömungsdämpfers vermieden werden. Gleichzeitig kann der Strömungsdruck abgebaut werden, indem ein Teil des Fluids durch den Strömungsdämpfer strömt.

Bevorzugt ist vorgesehen, dass der Querschnitt der Durchströmungsöffnung mindestens 15% des lichten Querschnitts des Strömungskanals beträgt, wenn sich der Stellkörper in der Schließlage befindet. Hierdurch kann bei einem großen Strömungsdruck mehr Fluid durch den Strömungsdämpfer strömen, wodurch der Strömungsdruck schneller abgebaut werden kann.

Besonders bevorzugt ist vorgesehen, dass der Querschnitt der Durchströmungsöffnung mindestens 25% des lichten Querschnitts des Strömungskanals beträgt, wenn sich der Stellkörper in der Schließlage befindet. Hierdurch kann bei einem großen Strömungsdruck besonders viel Fluid durch den Strömungsdämpfer strömen, wodurch der Strömungsdruck noch schneller abgebaut werden kann.

Bei einer weiteren vorteilhaften Ausgestaltung kann vorgesehen sein, dass die Durchströmungsöffnung zumindest teilweise zwischen dem Stellkörper und dem Strömungskanal ausgebildet ist, wenn sich der Stellkörper in der Ruhelage befindet. Hierdurch kann das Fluid zwischen dem Stellkörper und der Durchströmungsöffnung durch den Strömungsdämpfer strömen.

Beispielsweise kann dies erreicht werden, indem als Stellkörper eine Scheibe vorgesehen ist, deren Querschnitt kleiner als ein lichter Querschnitt des Strömungskanals ist. Somit kann zwischen der Scheibe und dem Strömungskanal das Fluid strömen.

Bei einer weiteren vorteilhaften Ausgestaltung kann vorgesehen sein, dass die Durchströmungsöffnung zumindest teilweise in den Stellkörper ausgebildet ist, wenn sich der Stellkörper in der Ruhelage befindet. Hierdurch kann das Fluid durch den Stellkörper hindurchströmen. Hierdurch kann ein Strömungswiderstand des Strömungsdämpfers reduziert werden. Zudem kann hierdurch erreicht werden, dass erst bei einem höheren Strömungsdruck der Stellkörper durch das Fluid in Richtung der Schließlage bewegt werden kann.

Beispielsweise kann der Stellkörper als Scheibe ausgebildet sein, in der eine oder mehrere Durchgangsbohrungen vorgesehen sind. Durch diese Durchgangsbohrungen kann das Fluid strömen. Der Stellkörper kann beispielsweise auch eine Form eines Kleeblatts oder eines Malteserkreuzes oder eine andere Form aufweisen. Alternativ oder zusätzlich kann der Stellkörper als Ringscheibe ausgebildet sein. Durch die Durchgangsöffnung in einer Mitte der Ringscheibe kann das Fluid in diesem Fall strömen.

Bei einer weiteren vorteilhaften Ausgestaltung kann vorgesehen sein, dass der Stellkörper in dem Strömungskanal angeordnet ist. Dies kann eine besonders kompakte Bauweise des Strömungsdämpfers ermöglichen.

Beispielsweise kann es sich bei dem Stellkörper um einen Ventilkörper oder auch um eine Klappe handeln, die in dem Strömungskanal angeordnet ist.

Bevorzugt verschließt der Stellkörper in der Schließlage eine Fluidauslauföffnung des Strömungskanal zumindest teilweise. Bei einer Durchströmung des Strömungsdämpfers kann das Fluid ab einem bestimmten Strömungsdruck also den Stellkörper in Richtung der Fluidauslauföffnung bewegen, bis der Stellkörper in der Schließlage diese Fluidauslauföffnung zumindest teilweise verschließt. Damit kann aus dem Strömungsdämpfer kein Fluid oder nur wenig Fluid austreten.

Bei einer weiteren vorteilhaften Ausgestaltung kann vorgesehen sein, dass zumindest in einem Abschnitt des Strömungskanals ein lichter Querschnitt des Strömungskanal, beispielsweise der zuvor genannte lichte Querschnitt, in Richtung einer Fluidauslauföffnung des Strömungskanals, beispielsweise der zuvor genannten Fluidauslauföffnung, abnimmt. Hierdurch können besonders große Strömungsdrücke des Fluids besonders stark gedämpft werden, da durch eine Bewegung des Stellkörpers in Richtung der Schließlage ein durchströmbarer Querschnitt innerhalb des Strömungskanals besonders stark reduziert wird.

Bei einer weiteren vorteilhaften Ausgestaltung kann vorgesehen sein, dass die Rückstellvorrichtung ein elastisches Element umfasst. Dadurch kann der Stellkörper besonders gut wieder in die Ruhelage bewegt werden und/oder in der Ruhelage gehalten werden.

Bevorzugt handelt es sich bei dem elastischen Element um eine Feder. Dies stellt eine besonders praktikable Möglichkeit dar, eine Rückstellvorrichtung zu realisieren. Alternativ oder zusätzlich handelt es sich bei dem elastischen Element um ein Gummi-Element. Auch durch ein Gummi-Element kann eine effektive Rückstellvorrichtung realisiert werden.

Bei einer weiteren vorteilhaften Ausgestaltung kann vorgesehen sein, dass die Rückstellvorrichtung einen ersten Permanentmagneten, der an dem Stellkörper angeordnet oder mit diesem gekoppelt ist, und einen zweiten Permanentmagneten umfasst, der an dem Strömungskanal angeordnet oder mit diesem gekoppelt ist. Hierdurch kann ebenfalls eine Rückstellvorrichtung realisiert werden. Besonders vorteilhaft hieran kann sein, dass die Permanentmagneten nicht durch das strömende Fluid mit dem Lauf der Zeit geschädigt werden können, wie es beispielsweise bei einer Feder oder einem Gummi-Element als Rückstellvorrichtung der Fall sein könnte.

Bevorzugt stoßen sich die Permanentmagneten gegenseitig ab. In diesem Fall kann der zweite Permanentmagnet an einer Stelle des Strömungskanals angeordnet oder mit dem Strömungskanal gekoppelt sein, an der sich die Schließlage des Stellkörpers befindet. Somit wäre die Abstoßwirkung der Permanentmagneten in der Schließlage am größten, sodass nur besonders große Strömungsdrücke diese Abstoßwirkung überwinden können und den Stellkörper somit in die Schließlage bewegen können.

Es ist aber auch denkbar, dass sich die Permanentmagneten gegenseitig anziehen. In diesem Fall könnte der zweite Permanentmagnet an einer Stelle des Strömungskanals angeordnet oder mit dem Strömungskanal gekoppelt sein, an der sich die Ruhelage des Stellkörpers befindet. In diesem Fall wäre die Anziehungskraft der Permanentmagneten in der Ruhelage des Stellkörpers am größten, sodass nur besonders große Strömungsdrücke den Stellkörper aus der Ruhelage heraus bewegen können.

Bevorzugt ist der zweite Permanentmagnet an einer Fluidauslauföffnung des Strömungskanals, beispielsweise der zuvor beschriebenen Fluidauslauföffnung, angeordnet oder mit dem Strömungskanal gekoppelt. Hierdurch kann erreicht werden, dass nur besonders große Strömungsdrücke den Stellkörper zur Fluidauslauföffnung bewegen können.

Bei einer weiteren vorteilhaften Ausgestaltung kann vorgesehen sein, dass der Stellkörper als eine Klappe ausgebildet ist. Hierdurch kann ein Stellkörper Körper auf einfache Weise realisiert sein.

Alternativ kann vorgesehen sein, dass der Stellkörper in Strömungsrichtung verschiebbar angeordnet ist. Dies kann mechanisch einfache Bewegungsabläufe ermöglichen. Der Stellkörper kann beispielsweise an zwei voneinander beabstandeten Stellen gelagert sein.

Bei einer weiteren vorteilhaften Ausgestaltung kann vorgesehen sein, dass der Stellkörper als ein zumindest teilweise scheibenförmiger Absperrkörper ausgebildet ist. Ein scheibenförmiger Absperrkörper kann eine besonders große Fläche aufweisen, sodass ein scheibenförmige Absperrkörper besonders leicht durch ein Fluid in Richtung der Schließlage bewegt werden kann.

Es ist denkbar, dass in dem scheibenförmigen Absperrkörper beispielsweise Durchgangsöffnungen vorgesehen sind, durch die ein Strömungswiderstand des scheibenförmigen Absperrkörpers reduziert werden kann.

Bei einer weiteren vorteilhaften Ausgestaltung kann vorgesehen sein, dass der Stellkörper als ein zumindest teilweise kugelförmiger Absperrkörper ausgebildet ist. Dies kann eine besonders leicht herzustellende Variante eines Stellkörpers darstellen.

Der zumindest teilweise kugelförmige Absperrkörper könnte beispielsweise in dem Strömungskanal angeordnet sein und sich in dem Strömungskanal zwischen der Ruhelage und der Schließlage bewegen. Ein kugelförmiger Absperrkörper kann besonders gut im Strömungskanal beweglich sein.

Bei einer weiteren vorteilhaften Ausgestaltung kann vorgesehen sein, dass der Stellkörper als ein zumindest teilweise zylinderförmiger oder kegelförmiger Absperrkörper ausgebildet ist. Hierdurch kann ebenfalls ein effektiver Stellkörper realisiert sein.

Besonders mit dem kegelförmigen Absperrkörper kann in der Schließlage der Strömungskanal besonders gut verschlossen werden.

Bei einer weiteren vorteilhaften Ausgestaltung kann vorgesehen sein, dass die Rückstellvorrichtung dazu ausgebildet ist, den Stellkörper entgegen eines vordefinierten Strömungsdruckes eines den Strömungsdämpfer durchströmenden Fluids in der Ruhelage zu halten. Hierdurch kann eine Dämpfungswirkung des Strömungsdämpfers erst ab einem bestimmten, gewünschten Druck - nämlich dem vordefinierten Strömungsdruck - erfolgen.

Beispielsweise könnte, wenn die Rückstellvorrichtung ein elastisches Element, beispielsweise eine Feder umfasst, eine Federstärke der Feder so ausgewählt sein, dass das Fluid erst ab einem bestimmten Strömungsdruck den Stellkörper aus der Ruhelage in Richtung der Schließlage bewegen kann. Hierdurch kann der Strömungsdämpfer den jeweiligen Anforderungen angepasst werden.

Denkbar ist beispielsweise auch, dass eine Magnetstärke von Permanentmagneten der Rückstellvorrichtung so gewählt ist, dass erst ab einem bestimmten Strömungsdruck der Stellkörper aus der Ruhelage heraus bewegt werden kann.

Hierdurch kann eine Dämpfungswirkung des Strömungsdämpfers flexibel eingestellt werden.

Bei einer weiteren vorteilhaften Ausgestaltung kann vorgesehen sein, dass der Stellkörper entlang eines in dem Strömungskanal ausgebildeten Strömungspfades beweglich ist. Hierdurch kann sich der Stellkörper, wenn der Strömungsdruck des Fluids ausreichend groß ist, mit dem Fluid im Strömungskanal auf die Schließlage zubewegen. Hierdurch kann ein schnell reagierender Stellkörper ausgebildet sein.

Bei einer weiteren vorteilhaften Ausgestaltung kann vorgesehen sein, dass eine Durchströmungsöffnung des Strömungsdämpfers, beispielsweise die zuvor beschriebene Durchströmungsrichtung, durch die Rückstellvorrichtung umso kleiner eingestellt wird, je größer eine Strömungsgeschwindigkeit an dem Stellkörper ist. Damit kann der Strömungsdämpfer auf besonders hohe Strömungsgeschwindigkeiten eines Fluids dämpfen.

Alternativ oder zusätzlich kann vorgesehen sein, dass die Durchströmungsöffnung durch die Rückstellvorrichtung umso kleiner eingestellt wird, je größer ein Druckabfall an dem Stellkörper ist. Dadurch können besonders hohe Strömungsdrücke eines Fluids besonders stark gedämpft werden.

Alternativ oder zusätzlich sind zur Lösung der genannten Aufgabe erfindungsgemäß die Merkmale des nebengeordneten, auf eine sanitäre Spülanlage gerichteten Anspruchs vorgesehen. Insbesondere wird somit zur Lösung der genannten Aufgabe bei einer sanitären Spülanlage der eingangs beschriebenen Art erfindungsgemäß vorgeschlagen, dass der Strömungsdämpfer wie zuvor und/oder unten beschrieben ausgebildet ist. Damit können die beschriebenen Vorteile auch bei der sanitären Spülanlage genutzt werden.

Bevorzugt weist die sanitäre Spülanlage einen Spülkasten auf. Dadurch kann, wenn der Spülkasten durch einen Nutzer bedient wird und der Spülkasten in der Folge Wasser abgibt, ein entstehender Wasserstrom durch den Strömungsdämpfer gedämpft werden, sodass keine Durchflussspitzen an einer Auslassseite des Strömungsdämpfers auftreten. So kann beispielsweise bei einem Toilettenbecken, welches fluidisch dem Strömungsdämpfer nachgeschaltet ist, vermieden wird, dass Wasser über einen Rand des Toilettenbeckens schießt.

Besonders bevorzugt ist eine Rückstellkraft der Rückstellvorrichtung einer Strömungsrichtung in einem bestimmungsgemäßen Gebrauch der sanitären Spülanlage entgegengesetzt. Hierdurch wirkt die Rückstellkraft einer Strömungskraft eines Fluids, welches in Strömungsrichtung durch den Strömungsdämpfer strömt, entgegen.

Wenn die Spülanlage beispielsweise eine Wassermenge abgibt, die in eine bestimmte Strömungsrichtung strömt, dann kann die Rückstellkraft dieser Strömungsrichtung entgegenwirken.

Hierdurch kann sichergestellt werden, dass durch das strömende Fluid, in diesem Fall Wasser, der Stellkörper aus der Ruhelage heraus bewegt werden kann und dass die Rückstellvorrichtung den Stellkörper in diese Ruhelage zurückbewegen kann.

Alternativ oder zusätzlich sind zur Lösung der genannten Aufgabe erfindungsgemäß die Merkmale des nebengeordneten, auf eine Verwendung eines Strömungsdämpfers gerichteten Anspruchs vorgesehen. Insbesondere wird somit zur Lösung der genannten Aufgabe bei einer Verwendung der eingangs beschriebenen Art erfindungsgemäß vorgeschlagen, dass ein wie zuvor und/oder unten beschriebener Strömungsdämpfer bei einer sanitären Spülanlage verwendet wird. Dadurch können die beschriebenen Vorteile bei der sanitären Spülanlage genutzt werden.

Bevorzugt weist die sanitäre Anlage einen Spülkasten auf. In diesem Fall kann die Verwendung eines Strömungsdämpfers besonders vorteilhaft sein, wie oben beschrieben.

Alternativ oder zusätzlich ist die sanitäre Spülanlage wie oben und/oder unten beschrieben ausgebildet. Dadurch können die bereits beschriebenen Vorteile genutzt werden.

Bevorzugt wird der Strömungsdämpfer in einem Ablaufrohr angeordnet. Dadurch können beispielsweise Durchflussspitzen einer Wasserströmung, welche durch das Ablaufrohr aus einem Spülkasten fließt, gedämpft werden.

Alternativ oder zusätzlich kann vorgesehen sein, dass eine Rückstellkraft der Rückstellvorrichtung einer Strömungsrichtung in einem bestimmungsgemäßen Gebrauch der sanitären Spülanlage entgegengesetzt ist. Hierdurch können die bereits beschriebenen Vorteil erreicht werden.

Bei einer vorteilhaften Ausführung kann vorgesehen sein, dass der Stellkörper bei einem Anstieg einer Strömungsgeschwindigkeit an dem Stellkörper nach einem Betätigen der Spülanlage einen Querschnitt einer Durchströmungsöffnung des Strömungsdämpfers, beispielsweise den zuvor beschriebenen Querschnitt der zuvor beschriebenen Durchströmungsöffnung, verringert. Hierdurch kann erreicht werden, dass Geschwindigkeitsspitzen in der Strömung reduziert werden können.

Alternativ oder zusätzlich kann vorgesehen sein, dass der Stellkörper bei einem Anstieg eines Druckabfalls an dem Stellkörper nach einem Betätigen der Spülanlage einen Querschnitt einer Durchströmungsöffnung des Strömungsdämpfers, beispielsweise den zuvor beschriebenen Querschnitt der zuvor beschriebenen Durchströmungsöffnung, verringert. Hierdurch können Druckspitzen und/oder Durchflussspitzen besonders gut ausgeglichen werden.

Bevorzugt kann vorgesehen sein, dass bei einem Erreichen eines stationären Strömungszustandes die Rückstellvorrichtung den Querschnitt der Durchströmungsöffnung vergrößert. Hierdurch kann erreicht werden, dass nur die anfänglichen Durchflussspitzen einer Fluidströmung ausgeglichen werden. Gleichzeitig kann sichergestellt werden dass, sobald stationäre Strömungsbedingungen vorherrschen, das Fluid ungehindert durch den Strömungsdämpfer fließen kann.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele und/oder mit einzelnen oder mehreren Merkmalen der zuvor beschriebenen Erfindungsvarianten.

Es zeigt:
- Figur 1: ein Ausführungsbeispiel eines erfindungsgemäßen Strömungsdämpfers,
- Figur 2: eine Schnittdarstellung des Strömungsdämpfers aus Figur 1,
- Figur 3: eine Schnittdarstellung eines weiteren Ausführungsbeispiels eines erfindungsgemäßen Strömungsdämpfers und
- Figur 4: ein Ausführungsbeispiel einer erfindungsgemäßen sanitären Spülanlage.

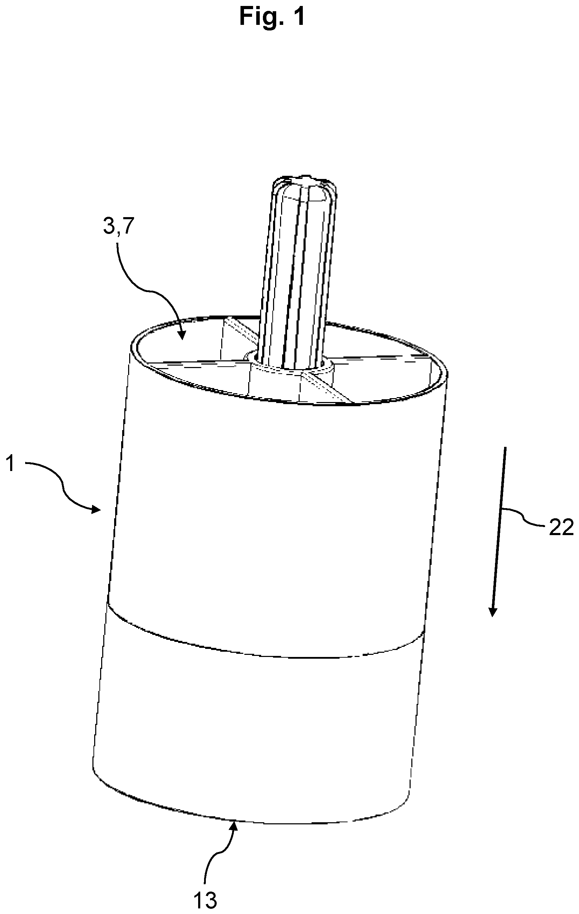

In Figur 1 ist ein Beispiel eines erfindungsgemäßen Strömungsdämpfers 1 gezeigt. Zu sehen ist, dass der Strömungsdämpfer 1 einen Strömungskanal 3 aufweist, durch den ein Fluid 7 strömen kann. Das Fluid 7 strömt dabei entlang einer Strömungsrichtung 22.

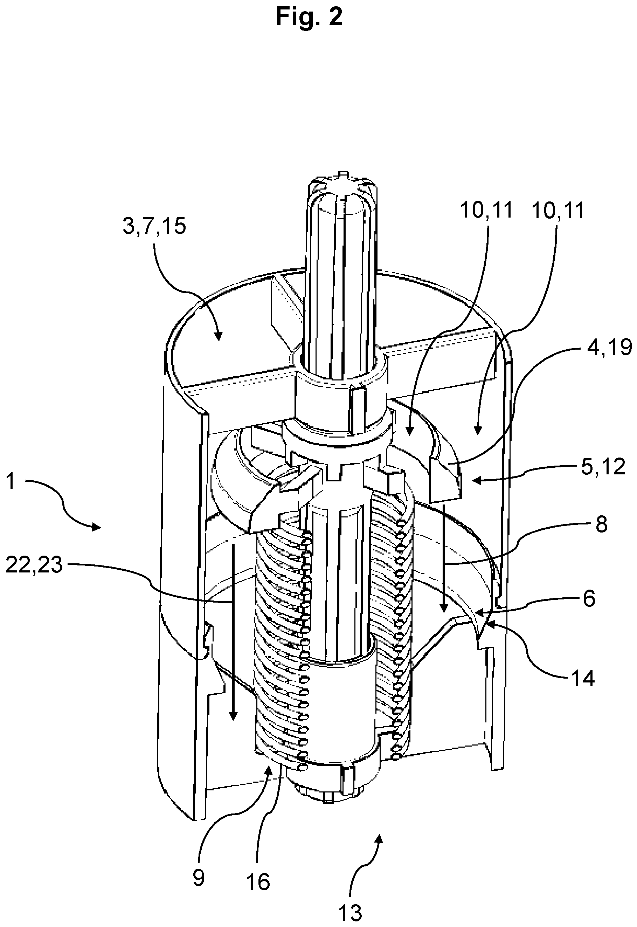

Figur 2 zeigt eine Schnittdarstellung des Strömungsdämpfers 1 aus Figur 1, der in einer sanitären Einrichtung 2 verwendet werden kann.

Der Strömungsdämpfer 1 hat im Inneren einen Stellkörper 4**.** Der Stellkörper 4 ist dabei in einer Ruhelage 5 dargestellt, welche die aktuelle Position 12 des Strömungsdämpfers 1 ist. Der Stellkörper 4 ist entlang eines Strömungspfades 23, der im Strömungskanal 3 ausgebildet ist, beweglich.

In dem Strömungsdämpfer 1 ist eine Durchströmungsöffnung 10 ausgebildet. Bei der Durchströmungsöffnung 10 handelt es sich um einen für ein Fluid 7 durchströmbaren Querschnitt des Strömungskanals 3 an der Position 12 des Stellkörpers 4. Der Querschnitt 11 der Durchströmungsöffnung 10 beträgt in diesem Ausführungsbeispiel 60% eines lichten Querschnitts 15 des Strömungskanals 3. Somit ist in der gezeigten Ruhelage 5 des Stellkörpers 4 der lichte Querschnitt 15 des Strömungskanals 3 zu 40% durch den Stellkörper 4 verschlossen.

Würde durch den gezeigten Strömungsdämpfer 1 ein Fluid 7 entlang der Strömungsrichtung 22 bzw. entlang des Strömungspfades 23 strömen und würde das Fluid 7 einen bestimmten Strömungsdruck aufweisen, so würde das Fluid 7 den Stellkörper 4 in Richtung der Schließlage 6 bewegen. Der resultierenden Schließbewegung 8 des Stellkörpers 4 in Richtung der Schließlage 6 würde die Rückstellvorrichtung 9 des Strömungsdämpfers 1 entgegenwirken.

Die Rückstellvorrichtung 9 weist hierzu ein elastisches Element 16 auf, welches in diesem Ausführungsbeispiel eine Feder ist. Das elastische Element 16 ist dazu ausgebildet, den Stellkörper 4 in der Ruhelage 5 zu halten. Wenn aber der Strömungsdruck des Fluids 7 stärker ist als eine Federkraft des elastischen Elements 16, so würde sich der Stellkörper 4 entgegen der Rückstellkraft der Rückstellvorrichtung 9, also entgegen der Federkraft des elastischen Elements 16, in Richtung der Schließlage 6 bewegen.

Die Federstärke des elastischen Elements 16 wurde sorgfältig ausgewählt, damit sich der Stellkörper 4 erst beim Vorliegen eines bestimmten Strömungsdruckes aus der Ruhelage 5 herausbewegt.

Zu sehen ist, dass in einem Abschnitt 14 des Strömungskanals 3 der lichte Querschnitt 15 des Strömungskanals 3 in Richtung der Fluidauslauföffnung 13 abnimmt. Der Abschnitt 14 korreliert räumlich mit der Schließlage 6 des Stellkörpers 4.

Dies hat zur Folge, dass der Querschnitt 11 der Durchströmungsöffnung 10 verringert wird, wenn sich der Stellkörper 4 in der Schließlage 6 befindet. Zudem folgt hieraus, dass der Querschnitt 11 der Durchströmungsöffnung 10 umso kleiner wird, je näher der Stellkörper 4 der Schließlage 6 ist.

In der Schließlage 6 verschließt der Stellkörper 4 den Strömungskanal 3 mehr als in der Ruhelage 5. In der Schließlage 6 beträgt der Querschnitt 11 der Durchströmungsöffnung 10 30% des lichten Querschnitts 15 des Strömungskanals 3. Somit ist der Strömungskanal 3, wenn sich der Stellkörper 4 in der Ruhelage 6 befindet, zu 70% verschlossen. Folglich kann in diesem Fall weniger Fluid 7 durch den Strömungsdämpfer 1 strömen, als wenn der Stellkörper 4 in der Ruhelage 5 ist.

Somit kann mit dem gezeigten Strömungsdämpfer 1 erreicht werden, dass Durchflussspitzen einer Strömung des Fluids 7 gedämpft werden. Treten nämlich solche Durchflussspitzen auf, dann bewegt sich der Stellkörper 4 wegen des strömenden Fluids 7 in die Schließlage 6. Damit wird eine Durchflussmenge an Fluid 7, die den Strömungsdämpfer 1 durchströmen kann, reduziert. Somit kann erreicht werden, dass die Durchflussspitzen nicht zur Fluidauslauföffnung 13 des Strömungsdämpfers 1 durchdringen.

Der Stellkörper 4 ist als ringförmiger Absperrkörper 19 ausgebildet. Somit befindet sich die Durchströmungsöffnung 10 teilweise zwischen dem Stellkörper 4 und einer Innenwandung des Strömungskanals 3. Zusätzlich ist die Durchströmungsöffnung 10 teilweise in dem Stellkörper 4 ausgebildet. Hierdurch kann eine besonders flexible Regelung des strömenden Fluids 7 erfolgen.

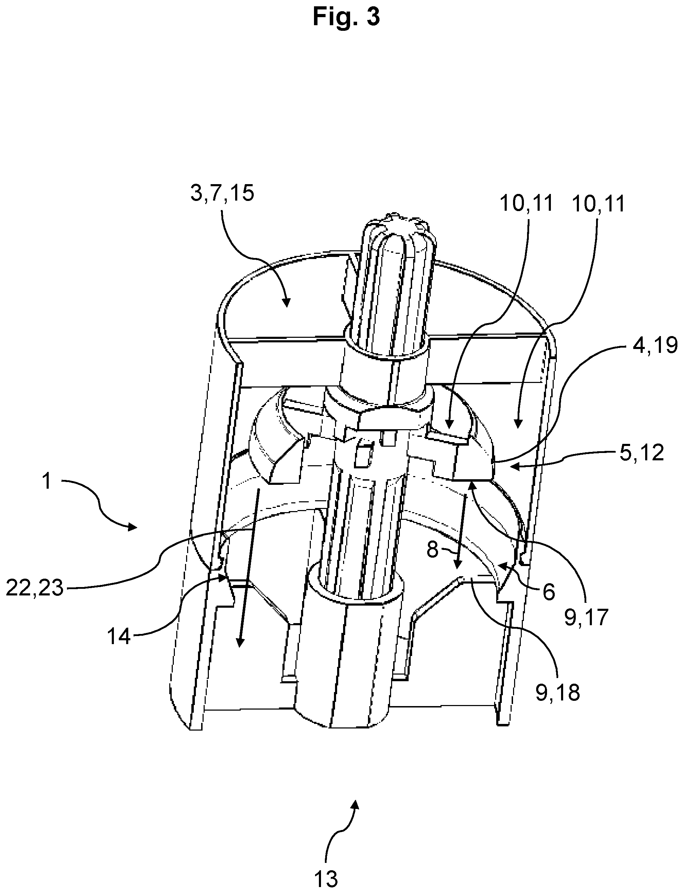

In Figur 3 ist eine Schnittdarstellung eines weiteren Ausführungsbeispiels eines erfindungsgemäßen Strömungsdämpfers 1 gezeigt. Der gezeigte Strömungsdämpfer 1 gleicht bis auf wenige unten beschriebene Ausnahmen dem Strömungsdämpfer 1 aus Figur 2. Insoweit wird auf die Beschreibung zu Figur 2 verwiesen.

Im Gegensatz zu Figur 2 umfasst die Rückstellvorrichtung 9 in Figur 3 jedoch kein elastisches Element 16, sondern einen ersten Permanentmagneten 17 und einen zweiten Permanentmagneten 18. Dabei handelt es sich um einander abstoßende Permanentmagnete 17, 18.

Der Permanentmagnet 17 ist an dem Stellkörper 4 angeordnet. Der Permanentmagnet 18 ist an dem Strömungskanal 3 in der Nähe der Fluidauslauföffnung 13 angeordnet.

Durch die einander abstoßenden Permanentmagnete 17, 18 wird eine Rückstellkraft der Rückstellvorrichtung 9 erzeugt, welche analog zur Federkraft des elastischen Elements 16 aus Figur 2 wirkt. Die Rückstellkraft wirkt nämlich einer Schließbewegung 8 des Stellkörpers 4 entgegen.

Eine Ausgestaltung mit Permanentmagneten 17, 18 statt mit einem elastischen Element 16 kann den Vorteil haben, dass Magnete weniger anfällig für Abrasion infolge von Fluidströmungen durch den Strömungsdämpfer 1 sind.

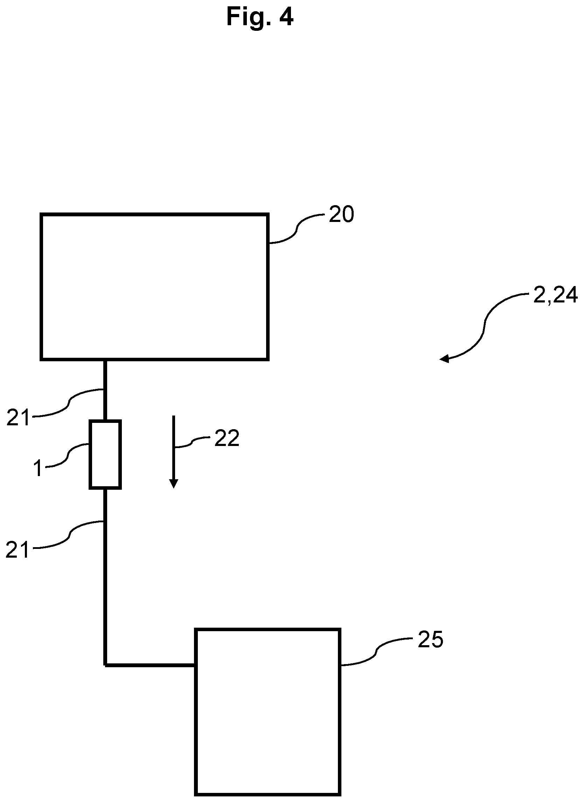

Figur 4 zeigt ein Ausführungsbeispiel einer erfindungsgemäßen sanitären Spülanlage 24, welche zu einer sanitären Einrichtung 2 gehört. Die sanitäre Spülanlage 24 umfasst einen Spülkasten 20, ein Ablaufrohr 21, einen in dem Ablaufrohr 21 angeordneten Strömungsdämpfer 1 sowie ein Toilettenbecken 25.

Betätigt ein Nutzer die sanitäre Spülanlage 24, dann gibt der Spülkasten 20 eine Menge eines Fluids 7, in diesem Fall Wasser, an das Toilettenbecken 25 ab. Das Wasser fließt in Strömungsrichtung 22 durch das Ablaufrohr 21 durch den Strömungsdämpfer 1.

Der Strömungsdämpfer 1 ist der wie der Strömungsdämpfer 1 aus den Figuren 1 und 2 ausgebildet. Dabei ist die Rückstellkraft der Rückstellvorrichtung 9 des Strömungsdämpfers 1 der Strömungsrichtung 22 entgegengesetzt.

Der Strömungsdämpfer 1 ist dazu ausgebildet, dass bei einem Anstieg einer Strömungsgeschwindigkeit oder bei einem Druckabfall an dem Stellkörper 4 des Strömungsdämpfers 1 der Querschnitt 11 der Durchströmungsöffnung 10 verringert wird. Dies hat zur Folge, dass Geschwindigkeitsspitzen und Durchflussspitzen der Wasserströmung gedämpft werden, sodass diese nicht zu dem Toilettenbecken 25 durchdringen. Dadurch kann verhindert werden, dass Wasser über einen Rand des Toilettenbeckens 25 spritzt.

Fallen die Geschwindigkeitsspitzen und die Durchflussspitzen wieder ab und wird ein stationärer Zustand der Strömung des Wassers erreicht, dann vergrößert sich der Querschnitt 11 der Durchströmungsöffnung 10 wieder, sodass das Wasser durch den Strömungsdämpfer 1 in das Toilettenbecken 25 abfließen kann.

Die Erfindung schlägt einen Strömungsdämpfer 1 für eine sanitäre Einrichtung 2 vor, der einen Strömungskanal 3 und einen Stellkörper 4 aufweist. Der Stellkörper 4 ist dabei zwischen einer Ruhelage 5 und einer Schließlage 6 beweglich. In der Schließlage 6 ist der Strömungskanal 3 zumindest teilweise durch den Stellkörper 4 verschlossen. Weiter wird vorgeschlagen, dass von einem den Strömungsdämpfer 1 durchströmenden Fluid 7 eine Schließbewegung 8 des Stellkörpers 4 in Richtung der Schließlage 6 erzeugbar ist. Der Strömungsdämpfer 1 weist zudem eine Rückstellvorrichtung 9 auf, die dazu ausgebildet ist, der Schließbewegung 8 entgegenzuwirken.

### Bezugszeichenliste

- 1: Strömungsdämpfer
- 2: Sanitäre Einrichtung
- 3: Strömungskanal
- 4: Stellkörper
- 5: Ruhelage
- 6: Schließlage
- 7: Fluid
- 8: Schließbewegung
- 9: Rückstellvorrichtung
- 10: Durchströmungsöffnung
- 11: Querschnitt von 10
- 12: Position von 4
- 13: Fluidauslauföffnung von 3
- 14: Abschnitt von 3
- 15: Lichter Querschnitt von 3
- 16: Elastisches Element von 9
- 17: Erster Permanentmagnet von 9
- 18: Zweiter Permanentmagnet von 9
- 19: Absperrkörper
- 20: Spülkasten
- 21: Ablaufrohr
- 22: Strömungsrichtung
- 23: Strömungspfad
- 24: Sanitäre Spülanlage
- 25: Toilettenbecken

## Patentansprüche

1. Strömungsdämpfer (1) für eine sanitäre Einrichtung (2) aufweisend einen Strömungskanal (3) und einen Stellkörper (4), wobei der Stellkörper (4) zwischen einer Ruhelage (5) und einer Schließlage (6) beweglich ist und wobei der Stellkörper (4) in der Schließlage (6) den Strömungskanal (3) zumindest teilweise verschließt, **dadurch gekennzeichnet, dass** von einem den Strömungsdämpfer (1) durchströmenden Fluid (7) eine Schließbewegung (8) des Stellkörpers (4) in Richtung der Schließlage (6) erzeugbar ist, wobei eine Rückstellvorrichtung (9) des Strömungsdämpfers (1) dazu ausgebildet ist, der Schließbewegung (8) entgegenzuwirken.

2. Strömungsdämpfer (1) nach dem vorangehenden Anspruch, **dadurch gekennzeichnet, dass** der Strömungsdämpfer (1) eine Durchströmungsöffnung (10) für ein Fluid (7) aufweist, wobei ein Querschnitt (11) der Durchströmungsöffnung (10) abhängig von einer Position (12) des Stellkörpers (4) ist, insbesondere wobei der Querschnitt (11) der Durchströmungsöffnung (10) umso kleiner ist, je näher der Stellkörper (4) der Schließlage (6) ist.

3. Strömungsdämpfer (1) nach dem vorangehenden Anspruch, **dadurch gekennzeichnet, dass** der Querschnitt (11) der Durchströmungsöffnung (10) eine Öffnung belässt, insbesondere mindestens 10%, vorzugsweise mindestens 30%, besonders vorzugsweise mindestens 50%, eines lichten Querschnitts (15) des Strömungskanals (3) beträgt, wenn sich der Stellkörper (4) in der Ruhelage (5) befindet.

4. Strömungsdämpfer (1) nach einem der beiden vorangehenden Ansprüche, **dadurch gekennzeichnet, dass** der Querschnitt (11) der Durchströmungsöffnung (10) eine verbleibende Öffnung belässt, insbesondere mindestens 5%, vorzugsweise mindestens 15%, besonders vorzugsweise mindestens 25%, eines oder des lichten Querschnitts (15) des Strömungskanals (3) beträgt, wenn sich der Stellkörper (4) in der Schließlage (6) befindet.

5. Strömungsdämpfer (1) nach einem der drei vorangehenden Ansprüche, **dadurch gekennzeichnet, dass** die Durchströmungsöffnung (10) zumindest teilweise zwischen dem Stellkörper (4) und dem Strömungskanal (3) ausgebildet ist, wenn sich der Stellkörper (4) in der Ruhelage (5) befindet.

6. Strömungsdämpfer (1) nach einem der vier vorangehenden Ansprüche, **dadurch gekennzeichnet, dass** die Durchströmungsöffnung (10) zumindest teilweise in dem Stellkörper (4) ausgebildet ist, wenn sich der Stellkörper (4) in der Ruhelage (5) befindet.

7. Strömungsdämpfer (1) nach einem der vorangehenden Ansprüche, **dadurch gekennzeichnet**, **dadurch gekennzeichnet, dass** der Stellkörper (4) in dem Strömungskanal (3) angeordnet ist, insbesondere wobei der Stellkörper (4) in der Schließlage (6) eine Fluidauslauföffnung (13) des Strömungskanals (3) zumindest teilweise verschließt.

8. Strömungsdämpfer (1) nach einem der vorangehenden Ansprüche, **dadurch gekennzeichnet, dass** zumindest in einem Abschnitt (14) des Strömungskanals (3) ein oder der lichte Querschnitt (15) des Strömungskanals (3) in Richtung einer oder der Fluidauslauföffnung (13) des Strömungskanals (3) abnimmt.

9. Strömungsdämpfer (1) nach einem der vorangehenden Ansprüche, **dadurch gekennzeichnet, dass** die Rückstellvorrichtung (9) ein elastisches Element (16), insbesondere eine Feder und/oder ein Gummi-Element, umfasst.

10. Strömungsdämpfer (1) nach einem der vorangehenden Ansprüche, **dadurch gekennzeichnet, dass** die Rückstellvorrichtung (9) einen ersten Permanentmagneten (17), der an dem Stellkörper (4) angeordnet oder mit diesem gekoppelt ist, und einen zweiten Permanentmagneten (18) umfasst, der an dem Strömungskanal (3), insbesondere an einer oder der Fluidauslauföffnung (13) des Strömungskanals (3), angeordnet oder mit diesem gekoppelt ist, insbesondere wobei sich die Permanentmagneten (17, 18) gegenseitig abstoßen.

11. Strömungsdämpfer (1) nach einem der vorangehenden Ansprüche, **dadurch gekennzeichnet, dass** der Stellkörper (4) als eine Klappe ausgebildet ist oder in Strömungsrichtung verschiebbar angeordnet ist.

12. Strömungsdämpfer (1) nach einem der vorangehenden Ansprüche, **dadurch gekennzeichnet, dass** der Stellkörper (4) als ein zumindest teilweise scheibenförmiger Absperrkörper (19) ausgebildet ist.

13. Strömungsdämpfer (1) nach einem der vorangehenden Ansprüche, **dadurch gekennzeichnet, dass** der Stellkörper (4) als ein zumindest teilweise kugelförmiger Absperrkörper (19) ausgebildet ist.

14. Strömungsdämpfer (1) nach einem der vorangehenden Ansprüche, **dadurch gekennzeichnet, dass** der Stellkörper (4) als ein zumindest teilweise zylinder- oder kegelförmiger Absperrkörper (19) ausgebildet ist.

15. Strömungsdämpfer (1) nach einem der vorangehenden Ansprüche, **dadurch gekennzeichnet, dass** die Rückstellvorrichtung (9) dazu ausgebildet ist, den Stellkörper (4) entgegen eines vordefinierten Strömungsdruckes eines den Strömungsdämpfer (1) durchströmenden Fluids (7) in der Ruhelage (5) zu halten.

16. Strömungsdämpfer (1) nach einem der vorangehenden Ansprüche, **dadurch gekennzeichnet, dass** der Stellkörper (4) entlang eines in dem Strömungskanal (3) ausgebildeten Strömungspfades (23) beweglich ist.

17. Strömungsdämpfer (1) nach einem der vorangehenden Ansprüche, **dadurch gekennzeichnet, dass** eine oder die Durchströmungsöffnung (10) des Strömungsdämpfers (1) durch die Rückstellvorrichtung (9) umso kleiner eingestellt wird, je größer eine Strömungsgeschwindigkeit und/oder ein Druckabfall an dem Stellkörper (4) ist/sind.

18. Sanitäre Spülanlage (24), insbesondere mit einem Spülkasten (20), mit einem Ablaufrohr (21), in dem ein Strömungsdämpfer (1) nach einem der vorangehenden Ansprüche angeordnet ist, insbesondere wobei eine Rückstellkraft der Rückstellvorrichtung (9) einer Strömungsrichtung (22) in einem bestimmungsgemäßen Gebrauch der sanitären Spülanlage (24) entgegengesetzt ist.

19. Verwendung eines Strömungsdämpfers (1) nach einem der Ansprüche 1 bis 13 bei einer insbesondere einen Spülkasten (20) aufweisenden und/oder nach dem vorangehenden Anspruch ausgebildeten sanitären Spülanlage (24), insbesondere wobei der Strömungsdämpfer (1) in einem Ablaufrohr (21) angeordnet wird und/oder wobei eine Rückstellkraft der Rückstellvorrichtung (9) einer Strömungsrichtung (22) in einem bestimmungsgemäßen Gebrauch der sanitären Spülanlage (24) entgegengesetzt ist.

20. Verwendung nach dem vorangehenden Anspruch, **dadurch gekennzeichnet, dass** der Stellkörper (4) bei einem Anstieg einer Strömungsgeschwindigkeit und/oder eines Druckabfalls an dem Stellkörper (4) nach einem Betätigen der Spülanlage (24) einen oder den Querschnitt (11) einer oder der Durchströmungsöffnung (10) des Strömungsdämpfers (1) verringert, insbesondere wobei bei einem Erreichen eines stationären Strömungszustandes die Rückstellvorrichtung (9) den Querschnitt (11) der Durchströmungsöffnung (10) vergrößert.
